# EUROPÄISCHE PATENTSCHRIFT

(11) **EP 0 695 491 B1**
(45) Veröffentlichungstag und Bekanntmachung des Hinweises auf die Patenterteilung: **27.01.1999**
(21) Anmeldenummer: 94913577.6
(22) Anmeldetag: 12.04.1994
(51) Int. Cl.: H04N 9/83, H04N 9/87

(54) **VERFAHREN ZUR KOMPATIBLEN AUFZEICHNUNG ODER WIEDERGABE VON FERNSEHSIGNALEN**
METHOD FOR COMPATIBLE RECORDING OR PLAYBACK OF TELEVISION SIGNALS
PROCEDE D'ENREGISTREMENT OU DE LECTURE COMPATIBLES DE SIGNAUX DE TELEVISION

(30) Priorität: 23.04.1993 DE 4313299
(43) Veröffentlichungstag der Anmeldung: 07.02.1996
(73) Patentinhaber: DEUTSCHE THOMSON-BRANDT GMBH, 78048 Villingen-Schwenningen (DE)
(72) Erfinder: PLANTHOLT, Martin, D-65549 Limburg (DE)
(74) Vertreter: Hartnack, Wolfgang, Dipl.-Ing.
(86) Internationale Anmeldenummer: EP9401125
(87) Internationale Veröffentlichungsnummer: WO9426070

(56) Entgegenhaltungen:
- WO-A-92/20193
- DE-A- 4 108 728
- RADIO FERNSEHEN ELEKTRONIK, Bd.41, Nr.8, August 1992, BERLIN DD Seiten 517 - 520, XP306669 SCHEPERS ET AL. 'PALplus im Heim'

## Beschreibung

Die Erfindung betrifft ein Verfahren zur kompatiblen Aufzeichnung oder Wiedergabe von Fernsehsignalen.

### Stand der Technik

Die Übertragung, Aufzeichnung und Wiedergabe von PAL-Bildsignalen im 16:9-Breitbildformat wird derzeit unter dem Stichwort "PALplus" entwickelt. Hierbei wird der Kompatibilität zur bestehenden PAL-Norm höchste Priorität eingeräumt. Erste Ergebnisse einer zukünftigen PALplus-Übertragung wurden auf der Internationalen Funkausstellung Berlin (IFA 1991) und der International Broadcasting Convention, Amsterdam (IBC 1992) demonstriert. Der Stand der Arbeiten wird in den Publikationen "PALplus-The EUROPEAN SYSTEM FOR WIDE-SCREEN TERRESTRIAL TV" (A. Ebner, R. Morcom, R. Ochs, U. Riemann, M. Silverberg. R. Storey, F. Vreeswijk, D. Westerkamp; IBC 92 Proceedings) und "PALplus IN THE HOME" (T. Vlek, M. Silverberg, C. Schepers, D. Westerkamp; IBC 92 Proceedings) dokumentiert siehe International Broadcasting Convention, Amsterdam Juli 1992, Technical Papers, Conference Publication Number 358, Seiten 161-164, "PAL plus in the Home" und Seiten 203-207, "PAL plus, the European System for wide screen Terrestrial TV".

Für die Übertragung von PALplus-Signalen ist eine Signalart-Kennung vorgesehen, die beispielsweise eine Angabe über die Quelle (Film oder Kamera) und über Bewegung des Bildinhaltes erlauben. Die Übertragung solcher Kennungen kann nach der DE-A-4112712 beispielsweise in der von Bildsignalen freien Hälfte der ersten oder letzten aktiven Zeile des Fernseh-Bildsignales erfolgen. Für die Aufzeichnung von PALplus-Signalen auf z.B. S-VHS-Recordern wird nach der DE-A-4111979 eine Teildecodierung der PALplus-Zusatzinformationen (Helpersignal) vorgesehen, so daß die Zusatzinformationen als Basisbandsignale aufgezeichnet werden. Eine Kennung aufgezeichneter PALplus-Signale, die bei der Wiedergabe auf 16:9-Empfängern die schon stattgefundene Teildecodierung berücksichtigt, kann nach der DE-A-4114605 erfolgen. In der DE-A-4108728 des gleichen Anmelders wurde ein Kopierzähler eingeführt, der "einer Vielzahl von denkbaren Anwendungen und Fällen zur anpaßbaren automatischen Steuerung und Kontrolle von Kopier-, Editier-, Aufnahme- und Wiedergabefunktionen" dienen kann. Konkretisiert wird die Nutzung dieses Copy-Counters in Zusammenhang mit einem Kopierschutz, der eine Sicherungskopie zuläßt. Es wird noch ein allgemeiner Hinweis gegeben, daß ein Videorecorder in Abhängigkeit von der Qualität des Eingangssignals die Aufzeichnungs-Qualität ändert.

WO-A-92220193 beschreibt ein kompatibles Aufzeichnungsverfahren für PALplus-Signale. Die durch das Helpersignal im oberen und unteren Randbereich des Letterbox-Formats möglicherweise auftretenden Farbstörungen werden mittels Eintastung eines konstanten Helligkeits-Wertes vermieden.

### Erfindung

Der Erfindung liegt die Aufgabe zugrunde, ein Verfahren zur erweiterten Nutzung von Kennungs-Informationen bei PALplus-Signalen anzugeben, insbesondere von auf S-VHS- oder Hi8-Recordern aufgezeichneten PALplus-Signalen. Diese Aufgabe wird durch das in Anspruch 1 angegebene Verfahren gelöst.

Wenn PALplus-Signale auf S-VHS- oder Hi8-Recordern oder auf digitalen Recordern aufgezeichnet werden, läßt sich das Farbsignal nur noch standardmäßig wiedergeben. Durch die bei der Aufzeichnung verwendete Colour-Under-Technik wird nämlich die Phasenbeziehung zwischen Farbträger und Synchronsignal nicht mehr korrekt wiedergegeben, sodaß das vorgesehene Wiedergabe-Verfahren für PALplus-Signale nicht mehr anwendbar ist. Dieses Wiedergabe-Verfahren zur Reduktion von Cross-Effekten ist unter dem Begriff Colour-Plus bekannt (R. Kays: Ein Verfahren zur verbesserten PAL-Codie und - Decodierung, F&KTG, 44.Jg., Heft 11, Nov. 1990, Seiten 595-602) und benötigt im Wiedergabegerät Bildspeicher (nicht dargestellt).

Die Kapazität dieser Bildspeicher in einem PALplus-Empfänger/-Decoder ist aber generell frei bei der Wiedergabe von auf S-VHS- bzw. Hi8-Recordern aufgezeichneten PALplus-Signalen und kann vorteilhaft für qualitätsverbessernde Maßnahmen eingesetzt werden.
Da durch das Colour-Under-Verfahren bedingt die Farbauflösung reduziert wird, sind Qualitätsverbesserungen wünschenswert. Eine subjektive Verbesserung wird z. B. erreicht, wenn das Farbsignal "angeschärft" wird (Crispening oder Peaking). Da Bildspeicher vorhanden sind, läßt sich dieses Peaking auch zwei- oder dreidimensional durchführen. Ein entsprechendes Filter mit frequenzanhebenden Eigenschaften kann mit einer zwei-dimensionalen Apertur (örtlich: Verknüpfung von Bildpunkten unterschiedlicher Zeilen im Teilbild) oder drei-dimensionalen Apertur (örtlich und zeitlich: Verknüpfungen im Vollbild) ausgebildet sein. Dabei kommt einer zweidimensionalen Apertur die ursprüngliche Speicherstruktur (s. F&KTG Dokument) mit einem Halbbildspeicher pro Komponente (U, V nach PAL-Demodulation) entgegen.

In einer weiteren Anwendung läßt sich die frei werdende Kapazität der halbbildspeicher auch für eine Zeitbasiskorrektur, der mit Jitter behafteten Signale vom Band ausnutzen.

Auch der für die Luminanzkomponente vorgesehene Halbbild-Speicher läßt sich anderweitig nutzen, wenn das Colour-Plus Verfahren nicht eingeschaltet ist. Dieser Bildspeicher läßt sich dann ebenfalls für qualitätsverbessernde Maßnahmen einsetzen (Zeitbasiskorrektur, 2-D Peaking).

Da der Speicherbedarf für eine Zeitbasiskorrektur und/oder schärfeverbessernde Maßnahmen geringer ist als die zur Verfügung stehende Speicherkapazität, sind auch Kombinationen von Qualitätsverbesserungen in allen oder einzelnen Signal-Komponenten Y, U, V realisierbar.

Alle diese qualitätsverbessernden Maßnahmen können nun generell bei Wiedergabe von aufgezeichneten PALplus-Signalen durchgeführt werden, und würden dann von einer erweiterten Signalart-Kennung (Codewort) initiiert, die die vorherige Aufzeichnung (und damit die Teildecodierung der PALplus-Zusatzinformationen) anzeigt.

Andererseits ist auch die Anwendung von Qualitätsverbesserungen in Abhängigkeit von einem Kopierzähler denkbar, der die Kopier-generation kennzeichnet. Die in der DE-A-4108728 bekannten Maßnahmen berücksichtigen aber nicht die bei der Erfindung erforderliche Kompatibilität zu dem existierenden analogen S-VHS-/Hi8-standard.

Für aufgezeichnete PALplus-Signale wird eine zusätzliche Information in die Signalart-Kennung eingebracht, die einer Wiedergabe-Einrichtung, z.B. einem PALplus-Empfänger, oder einer Weiterverarbeitungs-Einrichtung, z.B. einem zweiten Videorecorder, anzeigt, daß es sich um ein aufgezeichnetes PALplus-Signal handelt und somit eine Teildecodierung, d.h. Umsetzung der Zusatzinformationen in das Basisband, stattgefunden hat. In der Wiedergabe-Einrichtung wird dann aufgrund dieser Information, ein entsprechender Teil der Signaldecodierung nicht mehr aktiviert, wie z.B. in DE-A-4114605 beschrieben.
Diese erweiterte Kennung muß nun aus Kompatibilitätsgründen nicht nur für von Antenne oder Kabel angelieferte und dann aufgezeichnete PALplus-Signale gelten, sondern auch für wiederaufgezeichnete PALplus-Signale, d.h. für PALplus-Signale der mindestens zweiten Generation, sowie für z.B. über Cassetten (Pre-recorded Software) in den Markt eingebrachte PALplus-Software.
Für den letzten Fall (Pre-recorded Software) ist es dann möglich, mit der erweiterten Kennung in für PALplus-Signale vorbereiteten Recordern (PALplus-VCR) eine Aufnahmesperre in Gang zu setzen, die einen verbesserten Kopierschutz gewährleistet. Wenn nämlich versucht wird, die Information über den Kopierschutz zu unterbrechen, würden die bereits teil-decodiert aufgezeichneten PALplus-Signale in einem PALplus-Empfänger nochmals teil-decodiert, was zu starken Bildstörungen führt.
Weiterhin fällt mit zunehmender Generationenanzahl die Qualität der vom Band wiedergegebenen Signale ab. Vorteilhaft kann die Kennung der vom Band stammenden Signale auch eine Information über die jeweilige Kopiergeneration erhalten. Abhängig von dieser Information können dann qualitätsverbessernde Maßnahmen in der Wiedergabe-Einrichtung (z.B. Zeitbasiskorrektur und/oder schärfeverbessernde Maßnahmen (Crispening, Peaking) aktiviert werden.

Im Prinzip dient daß erfindungsgemäße Verfahren zur kompatiblen Aufzeichnung oder Wiedergabe von Fernsehsignalen, die eine Bildsignal-Zusatzinformation für eine 16:9-Darstellung enthalten, insbesondere von PALplus-Fernsehsionalen, mit einem S-VHS- oder Hi8-Videorecorder, wobei die Fernsehsignale eine Kennung über die Bild-Art dieser Fernsehsignale enthalten und wobei:
- die Kennung ist erweitert um eine zusätzliche Information über die Kopier-Generation und/oder über ein Kopie-Verbot der Fernsehsignale;
- bei der Aufzeichnung wird die Bildsignal-Zusatzinformation teil-decodiert verarbeitet und die Kennung entsprechend modifiziert;
- bei der Wiedergabe wird die Kennung ausgewertet und damit eine entsprechende Teil-Codierung der Bildsignal-Zusatzinformation im Videorecorder und eine entsprechende Teil-Decodierung der Bildsignal-Zusatzinformation in einem entsprechenden 16:9-Bildwiedergabegerät vermieden;
- die zusätzliche Information wird mit der Kennung derart kombiniert, daß im Fall von Fernsehsignalen mit Kopie-Verbot eine Unterbrechung der Übertragung der Kennung zum Bildwiedergabegerät eine Teil-Decodierung der Zusatzinformationen im Bildwiedergabegerät bewirkt;
- die im Bildwiedergabegerät benötigten Speichermittel für die Decodierung von nicht entsprechend aufgezeichneten Fernsehsignalen werden im Fall der Wiedergabe von entsprechend aufgezeichneten Fernsehsignalen zur Bildqualitäts-Verbesserung verwendet, insbesondere in Abhängigkeit von der der erweiterten Kennung entnommenen Zahl der Kopie-Generation.

Vorteilhafte Weiterbildungen des erfindungsgemäßen Verfahrens ergeben sich aus den zugehörigen abhängigen Ansprüchen.

### Zeichnungen

Anhand der Zeichnungen werden Ausführungsbeispiele der Erfindung beschrieben. Die Zeichnungen zeigen in:
- Fig. 1: ein erstes bekanntes Verfahren zur Aufzeichnung von PALplus-Signalen;
- Fig. 2: ein zweites bekanntes Verfahren zur Aufzeichnung von PALplus-Signalen;
- Fig. 3: erfindungsgemäße Aufzeichnung von PALplus-Signalen;
- Fig. 4: Einrichtung zur Auslösung eines Kopierschutzes bei pre-recorded PALplus-Software;
- Fig. 5: Einrichtung zur Kennzeichnung der Aufzeichnungsgenerationen.

### Ausführungs-Beispiele

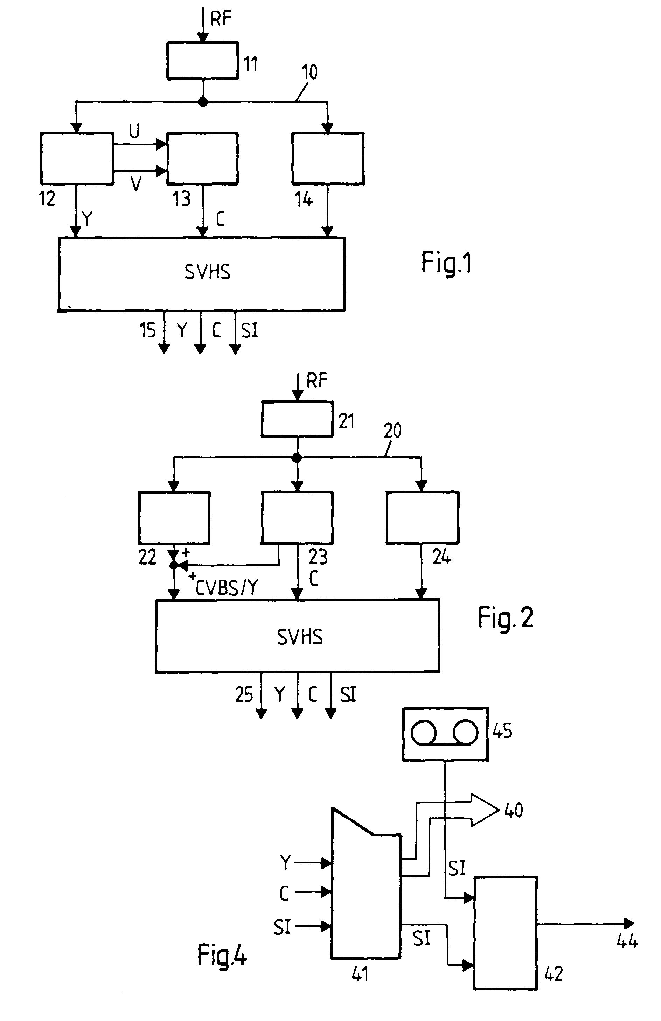

Fig. 1 und Fig. 2 zeigen zwei Verfahren zur Aufzeichnung von PALplus-Signalen (aus: PALplus IN THE HOME). Ein Antennensignal RF wird in einer Tuner/Demodulations-Schaltung 11, 21 zu einem PALplus-FBAS-Signal umgeformt. Aus diesem Signal wird die Signalart-Information SI in einem Signalart-Detektor 14, 24 gewonnen und einer S-VHS-Aufnahmeschaltung S-VHS zugeführt.
In Fig. 1 wird das PALplus-FBAS-Signal in einem PALplus-Decoder 12 decodiert und das resultierende Luminanz-Signal Y der Aufnahmeschaltung S-VHS und die Chrominanz-Signale U und V einem PAL-Encoder 13 zugeführt. Der PAL-Encoder erzeugt das Chrominanz-Signal C und liefert dieses ebenfalls an die Aufnahmeschaltung S-VHS.
In Fig. 2 wird das PALplus-FBAS-Signal in einem Y/C-Separator 23 aufgespalten und das resultierende Chrominanz-Signal C direkt und das Luminanz-Signal CVBS/Y kombiniert mit dem Ausgangssignal eines von dem PALplus-FBAS-Signal angesteuerten Y-Helper-Decoders 22 der Aufnahmeschaltung S-VHS zugeführt.
Beide Verfahren gehen von einem übertragenen PALplus-Signal aus, das vor der Aufzeichnung teildecodiert wird, d.h. die Zusatzinformationen erfolgt z.B. auf einem S-VHS-Recorder in Y und C. Im Y/C/SI-Ausgangssignal 15, 25 wird angezeigt, daß es sich um ein aufgezeichnetes PALplus-Signal handelt.

Ein für die Aufzeichnung von PALplus-Signalen geeigneter Recorder (PALplus-VCR) sollte nun nicht nur über Antenne/Kabel empfangene Signale RF verarbeiten können, sondern auch von einem anderen PALplus-VCR abgespielte Signale aufzeichnen können sowie Standard-PAL-Signale in gewohnter Form verarbeiten können. Dazu ist es notwendig, die Signalinformation SI zu erkennen und wiederum auf das Band zu schreiben. Diese Aufzeichnung kann wie in "PALplus IN THE HOME" beschrieben auf der Synchronspur erfolgen.

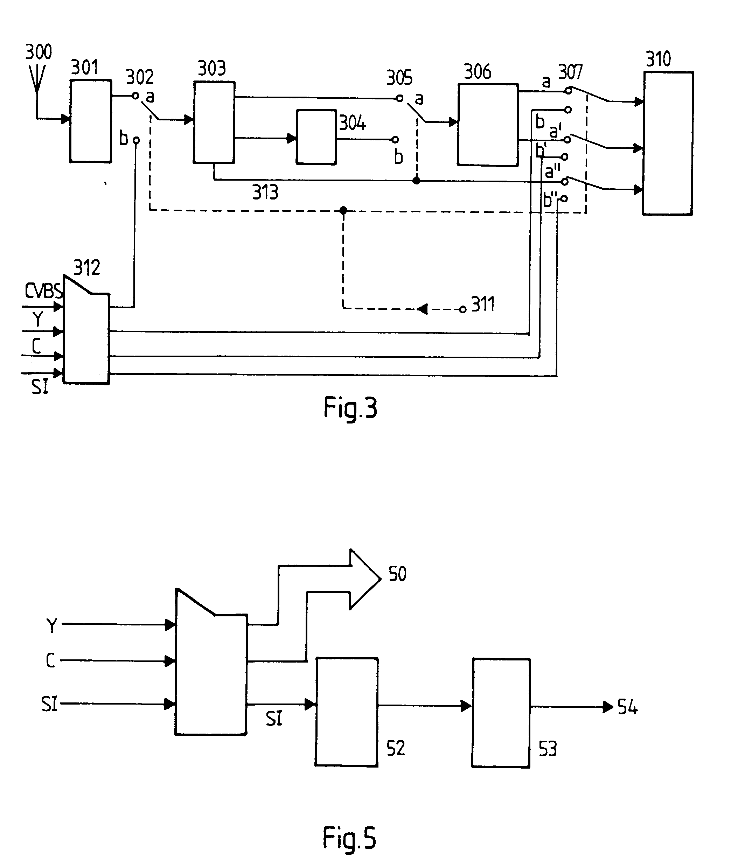

In Fig. 3 wird verdeutlicht, unter welchen Kompatibilitäts-Bedingungen ein PALplus-fähiger S-VHS-Recorder einzusetzen ist. Neben der Fähigkeit, PALplus-Signale aufzuzeichnen und wiederzugeben, sollte ein derartiger Recorder auch rückwärts-kompatibel zu Standard-PAL-Signalen sein.
Insofern können über einen HF-Eingang 300 (Antenne oder Kabel) PAL- und PALplus-Signale zugeführt werden, die dann zunächst über einen Tuner/Demodulator 301 in die FBAS-Ebene überführt werden. Das FBAS-Signal gelangt über einen ersten Umschalter 302 in Position 302a auf eine Signalerkennung/-auswertung 303. Die Schalterposition des Umschalters 302 und eines zweiten Umschalters 307 wird über ein Steuersignal 311 bestimmt, das durch die (manuelle) Vorwahl der Aufzeichnung von HF-mäßigen Signalen oder durch über eine SCART-Buchse 312 zugeführte Signale (nicht dargestellt) bestimmt wird.
Über die SCART-Buchse 312 können dann PAL- oder PALplus-Signale auf FBAS-Ebene dem Schalter 302 zugeführt werden, der diese Signale in Schalterposition 302b an die Signalerkennung/-auswertung 303 weitergibt. Die Signalerkennung/-auswertung detektiert ein PALplus-kennzeichnendes Signal, z.B. ein Codewort in Zeile 23 nach DE-A-4112712. Ist ein solches Codewort nicht vorhanden, liegt ein Standard-PAL-Signal vor, das über einen ersten Ausgang der Schaltung 303 auf einen dritten Umschalter 305 an Klemme 305a geführt wird.
Wird ein entsprechendes Codewort detektiert, liegt ein PALplus-Signal vor, das dann über einen zweiten Ausgang der Schaltung 303 einer Teildecodierungseinrichtung 304 zugeführt wird. Die Teildecodierung führt die PALplus-Zusatzinformationen aus der farbträgerfrequenten Lage in das Basisband zurück (Rück-Modulation) und bereitet das Signal für die nachfolgende Aufzeichnung vor. Das teildecodierte Signal wird an Klemme 305b des Schalters 305 geliefert.
Die Signalerkennung/-auswertung 303 liefert weiterhin die detektierte Signalinformation 313 (SI) in originaler oder erweiterter bzw. aktualisierter Form, um sie über Klemme 307a" des Umschalters 307 der Aufnahmeeinheit 310 zuzuführen. Mit dem Signal 313 oder einem davon abgeleiteten Signal wird der Schalter 305 gesteuert, der die PAL- oder PALplus-Signale an einen Luminanz/Chrominanz-Separator 306 liefert. Der Y/C-Separator 306 führt dann das Y-Signal an Schalterklemme 307a und das C-Signal an Schalterklemme 307a'.
Im Falle einer PALplus-Aufzeichnung von trägermodulierten Fernseh- oder Videorecorder-Signalen erhält dann die Aufnahme-einheit 310 über den Schalter 307 das Y-Signal, das C-Signal und die Signalinformation bzw. das Codewort. Im Falle einer PAL-Aufzeichnung ist jedoch das Codewort nicht vorhanden und beispielsweise eine logische Null an Klemme 307a" unterbindet eine Aufzeichnung einer (sowieso nicht vorhandenen) Signalinformation.
Signale auf Y/C-Ebene können über die SCART-Buchse 312 und Schalter 307 der Aufnahmeeinheit 310 zugeführt werden. PALplus-Signale werden dann wiederum von einer Signal information (Codewort) begleitet. Diese Signale stehen dann an den korrespondierenden Schalterklemmen 307b (Y), 307b' (C) und 307b" (SI) an. Im Falle von PAL-Signalen ist eine begleitende Signalinformation nicht vorhanden. Zur Erzeugung eines definierten Zustandes (z.B. logisch Null, s.o.) ist es möglich, die Signalinformations-Leitung der SCART-Buchse 312 ebenfalls über die Signalerkennung/-auswertung 303 zu führen. Im Falle von PALplus-Signalen ist somit auch eine oben beschriebene Aufbereitung/Regeneration der Signalinformation möglich.

Wird gemäß Fig. 4 und Fig. 5 z.B. für auf Cassetten eingeführte PALplus-Software die Signalinformation SI entsprechend modifiziert, läßt sich über eine Signalerkennung/-auswertung 42, 52 eine Aufzeichnungs-Sperre 44, 54 aktivieren, die eine Kopie dieser Software verhindert. Diese spezielle Signalinformation (Kennzeichnung von pre-recorded Software) läßt sich vorteilhaft mit der Kennzeichnung, daß es sich um PALplus-aufgezeichnete Signale handelt, derart verbinden, daß eine einfache Unterbrechung der SI-Signalleitung keine Umgehung des Kopierschutzes ermöglicht, sondern vielmehr eine unbrauchbare Wiedergabe des Bandmaterials erfolgt, weil die Teildecodierung der aufgezeichneten Signale nicht mehr erkannt wird. Die Signalerkennung/-auswernung 42, 52 entspricht der Einrichtung 303 in Fig. 3 oder kann sich in der Aufnahmeeinheit 310 befinden.
Die Signalerkennung 42 verarbeitet sowohl die von vorgefertigten Cassetten (pre-recorded), d.h. von einem Recorder 45 wiedergegebenen Signalinformationen SI als auch über einen SCART-Anschluß 41, 51 (Euro-Connector) zugeführte Signalinformation SI. Die dem SCART-Anschluß 41, 51 ebenfalls zugeführten Signale Y und C gelangen weiter zur Aufzeichnung 40, 50.
Die Signalerkennung 42, 52 kann vorteilhaft eine weitere Aufgabe übernehmen, indem zwischen pre-recorded (=geschützter) PALplus Software und Standard-PALplus-Aufnahmen unterschieden wird. Im Fall von Standard-PALplus-Aufnahmen läßt sich gemäß Fig. 5 in einer Incrementier-Schaltung 53 bei einer weiteren Aufnahme in die Signalinformation SI eine Kennzeichnung der Kopie-Generation beispielsweise in Form einer codierten Ordnungszahl einbringen. Bei Erkennung eines vom Band stammenden PALplus-Signales und gleichzeitiger Aktivierung des Aufnahmevorganges wird in der Signalinformation diese Ordnungszahl um eins erhöht (+1 Increment).

Anhand dieser Information können dann in der Wiedergabeeinrichtung (PALplus-Fernsehempfänger) oder schon im PALplus-VCR qualitätsverbessernde Maßnahmen getroffen werden, z.B. Rauschreduktions-Schaltungen, Höhenanhebung vor der Aufzeichnung, Umschaltung Normal/Longplay-Qualität. Die in einem PALplus-Empfänger/-Decoder vorhandenen Speichermittel, die bei Wiedergabe von PALplus-aufgezeichneten Signalen nicht mehr für die normalerweise stattfindende Cross-Effekte-Reduktion benötigt werden, sind dann vorteilhaft für eine Zeitbasiskorrektur anwendbar.

Die Erfindung läßt sich auch entsprechend im Fall von SECAM/SECAMplus-Signalen einsetzen.

## Patentansprüche

1. Verfahren zur kompatiblen Aufzeichnung oder Wiedergabe (310) von Fernsehsignalen (Y, C, RF), die eine codierte Bildsignal-Zusatzinformation für die in den außerhalb des 4:3-Bildbereichs liegenden Zeilen des aktiven Bildbereichs für eine 16:9-Letterbox-Darstellung enthalten, unter Verwendung von Bildsignal-Speichermitteln, wobei die Fernsehsignale eine Kennung (SI) über die Bild-Art dieser Fernsehsignale enthalten, **gekennzeichnet** durch:
- die Kennung (SI) ist erweitert um eine zusätzliche Information über die Kopier-Generation (53) und/oder über ein Kopie-Verbot (44, 54) der Fernsehsignale;
- bei der Aufzeichnung wird die Bildsignal-Zusatzinformation teil-decodiert (304) verarbeitet und die Kennung (SI) so modifiziert, daß sie die erfolgte Teil-Dekodierung anzeigt;
- bei der Wiedergabe wird die Kennung (SI) ausgewertet und damit eine der Teil-Decodierung (304) entsprechende Teil-Codierung der Bildsignal-Zusatzinformation mittels der Bildsignal-Speichermittel und eine entsprechende Teil-Decodierung (304) der Bildsignal-Zusatzinformation in einem 16:9-Letterbox-Bildwiedergabegerät vermieden;
- die um die Kopie-Zusatz information erweiterte ursprüngliche Kennung (SI) wird mittels der Kennungs-Modifikation so geändert, daß im Fall von Fernsehsignalen mit Kopie-Verbot eine eventuelle Unterbrechung der Übertragung der Kennung zum 16:9-Letterbox-Bildwiedergabegerät eine Teil-Decodierung (304) der Bildsignal-Zusatzinformationen im 16:9-Letterbox-Bildwiedergabegerät bewirkt;
- die im 16:9-Letterbox-Bildwiedergabegerät benötigten Bildsignal-Speichermittel für die Decodierung von nicht vorher entsprechend teil-decodiert (304) aufgezeichneten-Fernsehsigmalen mit 16:9-Letterbox-Zusatzinformationen werden im Fall der Wiedergabe von entsprechend teil-decodiert (304) aufgezeichneten Fernsehsignalen zur Bildqualitäts-Verbesserung verwendet.

2. Verfahren nach Anspruch 1, **dadurch gekennzeichnet**, daß die Bildqualitäts-Verbesserung in Abhängigkeit von der der geänderten Kennung (SI) entnommenen Information (53) über die Kopie-Generation erfolgt.

3. Verfahren nach Anspruch 1 oder 2, **dadurch gekennzeichnet,** daß die Bildqualitäts-Verbesserung eine Zeitbasis-Korrektur ist.

4. Verfahren nach einem der Ansprüche 1 bis 3, **dadurch gekennzeichnet,** daß die Bildqualitäts-Verbesserung eine zwei- oder mehrdimensionale Apertur der von den Bildsignal-Speichermitteln wiedergegebenen Fernsehsignale ist.

5. Verfahren nach einem der Ansprüche 1 bis 4, **dadurch gekennzeichnet,** daß die Bildqualitäts-Verbesserung ein Crispening und/oder eine Rauschreduktion der von den Bildsignal-Speichermitteln wiedergegebenen Fernsehsignale ist.

6. Verfahren nach einem der Ansprüche 1 bis 5, **dadurch gekennzeichnet,** daß in Abhängigkeit von der der erweiterten Kennung (SI) entnommenen Information (53) über die Kopie-Generation in den Bildsignal-Speichermitteln bei der Aufzeichnung eine Höhenanhebung und/oder eine entsprechende Umschaltung der Aufzeichnungs-Qualität erfolgt.

7. Verfahren nach einem der Ansprüche 1 bis 6, **dadurch gekennzeichnet,** daß die Fernsehsignale PALplus-Fernsehsignale sind.

8. Verfahren nach einem oder mehreren der Ansprüche 1 bis 6, **dadurch gekennzeichnet,** daß die Speichervorrichtung ein Viderecorder, insbesondere ein S-VHS- oder Hi8-Videorecorder oder ein digitaler Recorder ist.

## Claims

1. Method for compatible recording or playback of television signals (Y, C, RF) which contain coded additional picture signal information for the lines lying outside the 4:3 picture area of the active picture area for a 16:9 letterbox representation, using picture signal storing means, in which method the television signals contain a code (SI) on the type of picture of these television signals, characterized by:
- the code (SI) is expanded by additional information on the copying generation (53) and/or on a copying prohibition (44, 54) of the television signals;
- in the recording, the additional picture signal information is processed in a partially decoded form (304) and the code (SI) is modified such that it indicates the partial decoding which has taken place;
- in the playback, the code (SI) is evaluated and consequently a partial coding, corresponding to the partial decoding (304) of the additional picture signal information by means of the picture signal storing means, and a corresponding partial decoding (304) of the additional picture signal information in a 16:9 letterbox picture playback device are avoided;
- the original code (SI), expanded by the additional coping information, is altered by means of the code modification such that, in the case of television signals with a copying prohibition, a possible interruption of the transmission of the code to the 16:9 letterbox picture playback device effects a partial decoding (304) of the additional picture signal information in the 16:9 letterbox picture playback device;
- the picture signal storing means required in the 16:9 letterbox picture playback device for the decoding of not previously correspondingly recorded television signals, recorded in partially decoded form (304), with additional 16:9 letterbox information, are used in the case of the playback of correspondingly recorded television signals, recorded in partially decoded form (304), for picture quality enhancement.

2. Method according to Claim 1, characterized in that the picture quality enhancement takes place in dependence on the information (53) on the copying generation taken from the altered code (SI).

3. Method according to Claim 1 or 2, characterized in that the picture quality enhancement is a time base correction.

4. Method according to one of Claims 1 to 3, characterized in that the picture quality enhancement is a two-dimensional or multi-dimensional aperture of the television signals played back from the picture signal storing means.

5. Method according to one of Claims 1 to 4, characterized in that the picture quality enhancement is a crispening and/or a noise reduction of the television signals played back from the picture signal storing means.

6. Method according to one of Claims 1 to 5, characterized in that, in dependence on the information (53) on the copying generation taken from the expanded code (SI), there takes place a treble boost and/or a corresponding switching of the recording quality in the picture signal storing means during the recording.

7. Method according to one of Claims 1 to 6, characterized in that the television signals are PALplus television signals.

8. Method according to one or more of Claims 1 to 6, characterized in that the storing device is a video recorder, in particular an S-VHS or Hi8 video recorder or a digital recorder.

## Revendications

1. Procédé d'enregistrement ou de lecture compatibles (310) de signaux de télévision (Y, C, RF) qui contiennent une information complémentaire de signal vidéo codée pour les lignes situées dans la surface d'image hors 4:3 de la surface d'image active, pour une représentation en format large (letterbox) 16:9, en utilisant des moyens de mémorisation de signaux vidéo, les signaux de télévision contenant un indicatif d'identification (SI) sur le type d'image de ces signaux de télévision, **caractérisé en ce que**
- l'indicatif d'identification (SI) est étendu à une information complémentaire sur la génération de copie (53) et/ou une interdiction de copie (44, 54) des signaux de télévision;
- lors de l'enregistrement, l'information complémentaire de signal vidéo est décodée partiellement (304), traitée, et l'indicatif d'identification (SI) est modifié de sorte à mettre en évidence le décodage partiel effectué;
- lors de la lecture, l'indicatif d'identification (SI) est évalué et ainsi sont évités un codage partiel correspondant au décodage partiel (304) de l'information complémentaire du signal vidéo au moyen des outils de mémorisation du signal vidéo et un décodage partiel correspondant (304) de l'information complémentaire du signal vidéo dans un appareil de lecture vidéo au format large (letterbox) 16:9;
- l'indicatif d'identification (SI) d'origine, étendu à l'information complémentaire relative à la copie, est modifié au moyen de la modification d'indicatif d'identification de sorte que, dans le cas de signaux de télévision avec interdiction de copie, une éventuelle interruption de la transmission de l'indicatif d'identification à l'appareil de lecture vidéo au format large (letterbox) 16:9 produise un décodage partiel (304) des informations complémentaires des signaux vidéo dans l'appareil de lecture vidéo au format large (letterbox) 16:9;
- les moyens de mémorisation des signaux vidéo nécessaires dans l'appareil de lecture vidéo au format large (letterbox) 16:9 pour le décodage de signaux de télévision, non décodés partiellement auparavant (304), enregistrés avec des informations complémentaires relatives au format large (letterbox) 16:9, sont utilisés, dans le cas de la lecture de signaux de télévision décodés partiellement (304) enregistrés, pour l'amélioration de la qualité d'image.

2. Procédé conformément à la revendication 1, **caractérisé en ce que** la réalisation de l'amélioration de la qualité d'image dépend de l'information (53) relative à la génération de copie, prélevée dans l'indicatif d'identification (SI) modifié.

3. Procédé conformément à la revendication 1 ou 2, **caractérisé en ce que** l'amélioration de la qualité d'image est une correction de base de temps.

4. Procédé conformément à une des revendications 1 à 3, **caractérisé en ce que** l'amélioration de la qualité d'image est une ouverture bi- ou pluridimensionnelle des signaux de télévision lus par les moyens de mémorisation des signaux vidéo.

5. Procédé conformément à une des revendications 1 à 4, **caractérisé en ce que** l'amélioration de la qualité d'image est une réduction du bruit et/ou du resserrement d'image des signaux de télévision lus par les moyens de mémorisation des signaux vidéo.

6. Procédé conformément à une des revendications 1 à 5, **caractérisé en ce que** selon l'information (53) relative à la génération de copie, prélevée dans l'indicatif d'identification (SI) étendu, dans les moyens d'enregistrement du signal vidéo, lors de l'enregistrement, il se produit un renforcement des aiguës et/ou une inversion correspondante de la qualité d'enregistrement.

7. Procédé conformément à une des revendications 1 à 6, **caractérisé en ce que** les signaux de télévision sont des signaux PALplus.

8. Procédé conformément à une ou plusieurs des revendications 1 à 6, **caractérisé en ce que** le dispositif de mémorisation est un magnétoscope, en particulier un magnétoscope S-VHS ou Hi8 ou un enregistreur numérique.
